Europäisches Patentamt

European Patent Office

Office européen des brevets

(19)

(11) Veröffentlichungsnummer: **0 176 978 B1**

(12) **EUROPÄISCHE PATENTSCHRIFT**

(45) Veröffentlichungstag der Patentschrift: **27.03.91**

(21) Anmeldenummer: **85112282.0**

(22) Anmeldetag: **27.09.85**

Die Akte enthält technische Angaben, die nach dem Eingang der Anmeldung eingereicht wurden und die nicht in dieser Patentschrift enthalten sind.

(51) Int. Cl.⁵: **C08L 77/00, C08L 33/08, C08L 33/10, C08L 23/08, C08L 33/02**

(54) Schlagzähe Polyamid-Formmassen mit verminderter Spannungsrissanfälligkeit.

(30) Priorität: **04.10.84 DE 3436362**

(43) Veröffentlichungstag der Anmeldung:
**09.04.86 Patentblatt 86/15**

(45) Bekanntmachung des Hinweises auf die Patenterteilung:
**27.03.91 Patentblatt 91/13**

(84) Benannte Vertragsstaaten:
**BE CH DE FR GB IT LI NL**

(56) Entgegenhaltungen:
**EP-A- 0 096 264**
**EP-A- 0 125 483**
**DE-A- 2 654 346**
**DE-B- 2 713 537**

**PATENT ABSTRACTS OF JAPAN, Band 8, Nr. 41 (C-211)[1478], 22. Februar 1984; & JP - A - 58 201 845 (MITSUBISHI GAS KAGAKU K.K.) 24.11.1983**

(73) Patentinhaber: **BASF Aktiengesellschaft**
**Carl-Bosch-Strasse 38**
**W-6700 Ludwigshafen(DE)**

(72) Erfinder: **Matthies, Hans Georg, Dr.**
**Homburger Strasse 2**
**W-6700 Ludwigshafen(DE)**
Erfinder: **Reimann, Horst, Dr.**
**Adelheidstrasse 26**
**W-6520 Worms 1(DE)**

**Beschreibung**

Formkörper aus Polyamidformmassen sind spannungsrißempfindlich. Spannungsrißauslösend sind beispielsweise anorganische Lösungen und organische Flüssigkeiten wie niedrige Alkohole und Zinkchloridlösungen. Besonders anfällig sind hierfür amorphe Polyamide. So wurde schon versucht, wie aus der EP-Patentanmeldung 70 001 bekannt ist, die Spannungsrißkorrosion von amorphen Polyamiden auf Basis Isophthalsäure und Terephthalsäure durch den Zusatz von teilkristallinen Polyamiden, wie Polyamid-6, zu vermindern. Hierdurch werden jedoch die Eigenschaften des ursprünglichen Polyamids verändert. In gleicher Weise wurde auch schon versucht durch ternäre Polyamidmischungen die Spannungsrißkorrossion zu bewältigen, wie aus der DE-OS 26 51 741 bekannt ist. Das gleiche Prinzip, nämlich der Zusatz von teilkristallinen Polyamiden wurde auch schon bei schlagzäh ausgerüsteten Polyamiden auf Basis Terephthalsäure und Isophthalsäure versucht (vgl. EP-Anmeldung 73036). Die hierbei erzielten Ergebnisse lassen jedoch zu wünschen übrig.

Es war deshalb die technische Aufgabe gestellt, Polyamide auf Basis Terephthalsäure und Isophthalsäure, die schlagzäh ausgerüstet sind zur Verfügung zu stellen, bei denen die mechanischen Eigenschaften wie Schlagzähigkeit, Biegefestigkeit nicht beeinträchtigt sind, und die sich zusätzlich durch eine verminderte, insbesondere keine Spannungsrißanfälligkeit auszeichnen.

Diese Aufgabe wird gelöst durch schlagzähe Polyamidformmassen, bestehend aus

A einem linearen, thermoplastischen Polyamid, aufgebaut aus Resten, die sich von Terephthalsäure und Isophthalsäure im Verhältnis von 20:80 bis 80:20 sowie Alkandiaminen mit 4 bis 10 Kohlenstoffatomen ableiten, und mit einer relativen Viskosität von 1,4 bis 2,5, bestimmt an einer 1 %igen Lösung in Schwefelsäure bei 23° C, und

B 5 bis 60 Gew.-%, bezogen auf A, mindestens eines Copolymerisats aus mindestens 50 Gew.-% Ethylen,

mindestens 20 Gew.-% eines primären oder sekundären $C_2$-$C_8$-Alkylesters der (Meth)acrylsäure und 0,5 bis 10 Gew.-% eines säurefunktionellen oder latentsäurefunktionellen Monomeren,

wobei sich die Gewichtsprozente jeweils auf 100 % ergänzen, sowie

C. gegebenenfalls Zusatzstoffe in wirksamen Mengen.

Die neuen Polyamidformmassen sind schlagzäh und zeichnen sich durch eine Vielfalt von hervorragenden mechanischen Eigenschaften aus. Darüber hinaus zeichnen sie sich durch eine verminderte, insbesondere keine Spannungsrißanfälligkeit aus.

Polyamide gemäß der Erfindung (Komponente A) sind lineare thermoplastische Polyamide, aufgebaut aus Resten, die sich von Terephthalsäure und Isophthalsäure im Verhältnis von 20:80 bis 80:20 sowie Alkandiaminen mit 4 bis 10, vorzugsweise mit 6 bis 10 Kohlenstoffatomen ableiten, und mit einer relativen Viskosität, gemessen an 1 %iger konzentrierter schwefelsaurer Lösung bei 23° C, von 1,40 bis 2,50. In bevorzugten Polyamiden beträgt das Verhältnis von Terephthalsäure zu Isophthalsäureestern 30:70 bis 70 : 30. Besondere Bedeutung hat Hexamethylendiamin erlangt.

Die erfindungsgemäßen Copolymerisate B werden in einer Menge von 5 bis 60 Gew.-%, insbesondere 10 bis 30 Gew.-%, bezogen auf das Polyamid A, angewandt.

Die erfindungsgemäßen Copolymerisate sollen unvernetzt sein, d.h. sie sind vorteilhaft, zu mindestens 90 % in heißen Lösungsmitteln, wie Toluol, Ethylbenzol oder Tetrachlorethylen löslich. Sie bestehen aus

mindestens 50 Gew.-% Ethylen,

mindestens 20 Gew.-%, vorzugsweise 25 bis 38 Gew.-%, insbesondere 31 bis 36 Gew.-% eines primären oder sekundären $C_2$-$C_8$-Alkylesters der (Meth)acrylsäure, vorzugsweise n-Butylacrylat und

0,5 bis 10 Gew.-% eines säurefunktionellen oder latent säurefunktionellen Monomeren, z.B. säuregruppen enthaltende Monomere wie Methacrylsäure oder Acrylsäure oder einem Monomeren mit verkappten Säuregruppen, das unter den Konfektionierbedingungen oder den Polymerisationsbedingungen Säuregruppen bildet, wie Maleinsäureanhydrid oder t-Butyl(meth)acrylat.

Die bevorzugten Copolymerisate haben einen Schmelzbereich (Schmelzpunkt) von 40 bis 100° C und eine Glasübergangstemperatur unter -20°, insbesondere unter -40° C. Die Copolymerisate sind im allgemeinen hochmolekular und haben einen Schmelzindex MFI 190/2,16 (DIN 53 735) von 4 bis 20. Die Herstellung der Copolymerisate erfolgt in üblicher an sich bekannter Weise durch Polymerisation der Komponenten bei erhöhter Temperatur unter hohem Ethylendruck.

Vorteilhaft liegen die Copolymerisate B in den fertigen Polyamidformmassen in einer Teilchengröße von 0,01 bis 3 μm, insbesondere 0,03 bis 1 μm vor.

Die erfindungsgemäßen Polyamidformmassen enthalten gegebenenfalls zusätzlich übliche Zusatzstoffe C in wirksamen Mengen. Geeignete Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füll- und Verstärkungsmittel. Die Stabilisatoren können den Massen- in jedem Stadium der Herstellung zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren sollen mit der Formmasse verträglich sein.

Zu den Oxidationsverzögerern und Wärmestabilisatoren die den thermoplastischen Massen gemäß der Erfindung zugesetzt werden können, zählen beispielsweise Halogenide von Metallen der Gruppe 1 des periodischen Systems, z.B. Natrium, Kalium, Lithium, Kupfer-I -Halogenide, z.B. Iodide. Ferner sind geeignet sterisch gehinderte Phenole oder Hydrochinone. Sie werden in der Regel in Konzentrationen bis zu 1 Gew.-%, bezogen auf das Gewicht des Polyamids, zugesetzt.

Als UV-Stabilisatoren verwendet man diejenigen, die allgemein zu Polymeren zugesetzt werden, in Mengen bis zu 2 Gew.-%, bezogen auf das Polyamid. Beispiele für geeignete UV-Stabilisatoren sind verschiedene substituierte Resorcine, Salicylate, Benzotriazole oder Benzophenone.

Geeignete Gleit- und Entformungsmittel, die, z.B. in Mengen bis zu 1 Gew.-%, der Formmasse zugesetzt werden, sind Stearinsäure, Stearylalkohol, Stearinsäureamide, ferner können zugesetzt werden organische Farbstoffe, wie Nigrosin, Pigmente wie Titandioxid oder Phthalocyanine, ferner Ruß, faser- und pulverförmige Füllstoffe und Verstärkungsmittel, wie Kohlenstoffasern, Glasfasern, Kalciumsilikat, Aluminiumsilikat, Magnesiumcarbonat, Glimmer oder Feldspat, z.B. in Mengen bis zu 50 Gew.-% der Formmasse.

Die Formmassen gemäß der Erfindung werden üblicherweise durch Mischung der Komponenten A und B und gegebenenfalls C, in üblichen, für die Kunststoffverarbeitung geeigneten Mischvorrichtungen, z.B. Extrudern bei Temperaturen über dem Schmelzpunkt des Polyamids A gemischt, wobei gleichzeitig eine Feinverteilung des Copolymerisats B erfolgt. Die erfindungsgemäßen Formmassen sind geeignet zur Herstellung von Formteilen durch Spritzguß und Extrusion.

Der Gegenstand der Erfindung sei an folgenden Beispielen veranschaulicht.

## Beispiel 1

85 Gew.-Teile eines Copolyamids, aufgebaut aus Terephthalsäure, Isophthalsäure und Hexamethylendiamin, wobei der Anteil an Terephthalsäure 40 Mol.-% und der an Isophthalsäure 60 Mol.-% beträgt, mit einer relativen Viskosität von 1,91, gemessen an einer 1 gew.-%igen Lösung in konzentrierter Schwefelsäure bei 23°C und 15 Gew.-Teile eines Terpolymerisats aus 67,5 Gew.-% Ethylen, 32 Gew.-% n-Butylacrylat und 0,5 Gew.-% Maleinsäureanhydrid mit einem Schmelzindex von 14,5 g/10 min gemessen bei 190°C und 2,16 kg Belastung wurden in einem Zweischneckenextruder bei 290°C vermischt, extrudiert und granuliert. Das getrocknete Granulat wurde auf einer Spritzgußmaschine zu Flachstäben 1,6 x 12,7 x 127 mm verspritzt. Im Normklima (23°G, 50 % relative Feuchte), konditionierte Flachstäbe wurden zur Untersuchung des Spannungsrißverhaltens bogenförmig in einem Becherglas eingespannt, so daß ein Knickwinkel von 55° entstand.

Jeweils eine Probe wurde mit jeweils einem der in der nachfolgenden Tabelle aufgeführten Flüssigkeiten übergossen und bei Raumtemperatur 4 Wochen gelagert und dann auf Spannungsriße geprüft. Die Ergebnisse sind aus nachfolgender Tabelle zu entnehmen.

## Vergleichsbeispiel 1

85 Gew.-Teile eines Copolyamids der Zusammensetzung wie in Beispiel 1, angegeben mit einer relativen Viskosität von 1,86 und 15 Gew.-Teilen eines EPDM-Kautschuks (Ethylen-propylen-Dienkautschuk mit ca. 30 % Propylen) mit ca. 30 Gew.-% Propylenanteil, der analog zu DE-OS 26 22 973 mit Maleinsäure gepfropft wurde, werden in einem Zweiwellenextruder bei einer Temperatur von 290°C vermischt, extrudiert und granuliert. Wie in Beispiel 1 beschrieben, werden Flachstäbe gespritzt und dem Spannungsrißkorrosionstest unterzogen. Die Ergebnisse sind aus der nachfolgenden Tabelle zu entnehmen. Methanol verursacht bereits beim Übergießen einen sofortigen Bruch der Probe. Aceton führte nach einem Tag Lagerung zu Spannungsrissen, die Oberfläche wurde hierbei matt.

## Vergleichsbeispiel 2

Ein Copolyamid der in Beispiel 1 der angegebenen Zusammensetzung, wurde analog zu Flachstäben gespritzt und wie in Beispiel 1 auf Spannungsrißkorrosion geprüft. Die Ergebnisse sind aus folgender Tabelle zu entnehmen.

Tabelle

| Beispiel | Zusammensetzung | Spannungsrisse nach 4 Wochen | | | Reißfestigkeit nach DIN 53 455 $N/mm^2$ | Kerbschlagprüfung nach DIN 53 453 bei −40°C $kJ/m^2$ |
| --- | --- | --- | --- | --- | --- | --- |
| | | Aceton | Methanol | 10% $ZnCl_2$ | | |
| 1 | Copolyamid 6I/6T +15 Gew.-% Kautschuk (E-nBA-MSA 67,5-32-0,5) | keine | keine | keine | 59 | 10 |
| Vergl. 1 | Copolyamid 6I/6T+15 gew.% EPDM Kautschuk | Querrisse Oberfläche matt | zerspringt beim Übergießen; Oberfläche matt. | keine | 55 | 9 |
| Vergl. 2 | Copolyamid 6I/6T ohne Zusatz | zahlreiche Querrisse Oberfläche matt | zerspringt beim Übergießen Oberfläche matt | Quer- und Längsrisse, spröde | 89 | 2 |

## Ansprüche

1. Schlagzähe Polyamidformmassen, bestehend aus

A einem linearen, thermoplastischen Polyamid, aufgebaut aus Resten, die sich von Terephthalsäure und Isophthalsäure im Verhältnis von 20 : 80 bis 80 : 20 sowie Alkandiaminen mit 4 bis 10 Kohlenstoffatomen ableiten, und mit einer relativen Viskosität von 1,4 bis 2,5, bestimmt an einer 1 %igen Lösung in Schwefelsäure bei 23° C und

B 5 bis 60 Gew.-%, bezogen auf A, mindestens eines copolymerisats aus mindestens 50 Gew.-% Ethylen,
mindestens 20 Gew.-% eines primären oder sekundären $C_2$- bis $c_8$-Alkylesters der (Meth)-acrylsäure und
0,5 bis 10 Gew.-% eines säurefunktionellen oder
latentsäurefunktionellen Monomeren,
wobei sich die Gewichtsprozente jeweils auf 100 % ergänzen, und

C gegebenenfalls Zusatzstoffe in wirksamen Mengen.

## Claims

1. An impact-resistant polyamide molding material comprising

A a linear, thermoplastic polyamide composed of radicals derived from terephthalic acid and isophthalic acid in a ratio of from 20:80 to 80:20 and alkanediamines of 4 to 10 carbon atoms, having a relative viscosity of from 1.4 to 2.5, determined on a 1% strength solution in sulfuric acid at 23° C, and

B from 5 to 60% by weight, based on A, of one or more copolymers of
at least 50% by weight of ethylene,
at least 20% by weight of a primary or secondary $C_2$-$C_8$-alkyl ester of (meth)acrylic acid and
from 0.5 to 10% by weight of a monomer possessing an acidic functional group or a latent acidic functional group, the percentages summing to 100% in each case, and

C optionally additives in effective amounts.

## Revendications

1. Matières à mouler en polyamide, résistant au choc, constituées

A d'un polyamide thermoplastique, linéaire, qui se compose de restes qui proviennent de l'acide téréphtalique et de l'acide isophtalique dans le rapport de 20:80 à 80:20, comme aussi d'alcanediamines qui comportent de 4 à 10 atomes de carbone, et d'une viscosité relative de 1,4 à 2,5, telle que déterminée sur une solution à 1% dans l'acide sulfurique à 23° C et

B de 5 à 60% en poids, par rapport à A, d'au moins un copolymère constitué d'au moins 50% en poids d'éthylène,
d'au moins 20% en poids d'un ester alkylique en $C_2$ à $C_8$, primaire ou secondaire, de l'acide (méth)acrylique et
de 0,5 à 10% en poids d'un monomère à fonctionnalité acide ou à fonctionnalité acide latente, où les pourcentages pondéraux s'additionnent pour atteindre chaque fois 100% et

C éventuellement, d'additifs en proportions actives.